# EUROPEAN PATENT SPECIFICATION

(11) **EP 2 112 003 B1**
(45) Date of publication and mention of the grant of the patent: **24.02.2016**
(21) Application number: 09290303.8
(22) Date of filing: 24.04.2009
(51) Int. Cl.: B60C 1/00, C08L 21/00, C08L 93/00, C08K 3/34, C08K 5/101, C08K 5/103

(54) **Tire rubber composition with improved wet traction properties**
Reifengummizusammensetzung mit verbesserten Nasstraktionseigenschaften
Composition de caoutchouc pour pneu dotée de propriétés de traction mouillée améliorées

(30) Priority: 25.04.2008 KR 20080039011
(43) Date of publication of application: 28.10.2009
(73) Proprietor: Kumho Tire Co., Inc., Gwangsan-gu Gwangju 506-711 (KR)
(72) Inventor: Lee, Young Deuck, Gwangju 503-769 (KR)
(74) Representative: Gevers & Orès

(56) References cited:
- JP-A- 1 215 838
- JP-A- 57 061 072
- JP-A- 2006 152 021
- US-A1- 2004 127 617

## Description

### BACKGROUND OF THE INVENTION

This application claims priority to Korean Patent Application No. 10-2008-0039011, filed on April 25, 2008, in the Korean Intellectual Property Office, the entire contents of which are hereby incorporated by reference.

### 1. Field of the Invention

The present invention relates to a tire rubber composition with improved wet traction properties including oil obtained by combining natural fat with modified rosin-based resin, and more particularly, to a tire rubber composition with improved wet traction properties which includes 1 to 50 parts by weight of oil consisting of natural fat combined with modified rosin-based resin, relative to 100 parts by weight of rubber material.

### 2. Description of the Related Art

With respect to a tire rubber composition, a process oil is generally used to improve combination energy efficiency when elastic materials having different polar properties and/or viscosities are blended and to enhance processing quality of rubbers. Such process oil may be employed as a softener in place of existing petroleum based rubber oils with deteriorated quality, so as to improve compatibility with rubber and increase molecular weight of oil which in turn reduces migration effects, thereby preventing ageing of the rubber over time. In addition, using a white process oil instead of conventional dark brown process oil may improve compatibility with rubber. When a rubber fabricated using a rubber composition containing the above white process oil is used for manufacture of tires, appearance of the tires and a black level of surface of the rubber may be enhanced.

In general, the process oil added to a rubber composition in order to fabricate a tire rubber is a viscous oil consisting of hydrocarbon compounds, for example, aromatic, paraffin and naphthene series components.

Characteristics of the process oil are varied according to constitutional compositions of three components. However, the aromatic hydrocarbon contained in the process oil often includes polycyclic aromatic hydrocarbons (PAHs) as harmful materials. Among the aforementioned three components, the aromatic component is most compatible with rubber, thus being required as a significant ingredient of the process oil.

Accordingly, there have been numerous studies and investigations into improvement of eco-friendly characteristics of a tire rubber composition by decreasing an amount of the process oil added to the composition, as well as reduction of PAHs as harmful materials by lowering a content of an aromatic component therein while constantly maintaining or increasing an amount of the process oil added to a tire rubber composition. However, there is not yet proposed a novel process oil with harmful materials such as PAHs completely eliminated therefrom. Moreover, as for a tire rubber composition containing a process oil with reduced aromatic fractions, the composition may entail problems of deteriorated physical properties, efficiency and/or economical properties, as compared to existing compositions.

With regard to the present invention, conventional technologies have been disclosed. For instance, Korean Patent Laid-Open No. 2005-0002643 describes a rubber composition comprising: from about 40 to about 90 parts by weight of a solution polymerized styrene-butadiene having a styrene content of greater than 38 percent by weight ("wt.%") and a glass transition temperature of from about - 10 to about -25°C; from about 10 to about 60 parts by weight of at least one additional elastomer; and from about 10 to about 70 parts by weight of process oil having a glass transition temperature of from about -80 to about -40°C and a polycyclic aromatic content of less than 3 wt.% as determined by the IP 346 method, relative to 100 parts by weight of elastomer. The process oil disclosed in the cited patent includes an aromatic component possibly exhausting harmful materials such as PAHs. JP 01 215838 relates to a rubber composition used for the preparation of tire treads comprising 100 parts by weight of a diene rubber, 5 to 20 phr of a specified tung oil as natural fat, a triazine accelerator and 1 to 30 phr of a resin. The resin may be a rosinous-based resin but no mention is made of a modified rosin-based resin obtained by adding clay or C₁ to C₁₀ fatty acid alkylesters to rosin-based resin. US 2004/0127617, relates to a composition for tire treads comprising a diene elastomer, and a plasticizer comprising a glycerol oleic acid triester. The plasticizer may comprise one or more plasticizing oils extracted from petroleum such as paraffinic, aromatic and naphthenic oils. Accordingly, in aspects of environmental protection, there is still a requirement for solving problems described above.

### SUMMARY OF THE INVENTION

Accordingly, it is an object of the present invention to prove a tire rubber composition prepared using a specified oil as a process oil for the tire rubber composition obtained by combination of natural fat as an eco-friendly and economical modified natural oil with modified rosin-based resin, so that the rubber composition exhibits excellent processing properties in combination of raw materials, increased physical properties and, especially, improved wet traction properties. The modified rosin-based resin is a resin obtained by adding at least one selected from a group consisting of clay and C₁ to C₁₀ fatty acid alkylesters to rosin-based resin, then, agitating the mixture

Another object of the present invention is to provide a rubber including the rubber composition described above.

A further object of the present invention is to provide a tire manufactured using the rubber containing the rubber composition described above.

In order to accomplish the above objects, there is provided a tire rubber composition with improved wet traction properties, comprising: 1 to 50 parts by weight of oil consisting of natural fat combined with the modified rosin-based resin, relative to 100 parts by weight of rubber material, wherein the modified rosin-based resin is a resin as described above

Also, the present invention provides a rubber including the rubber composition described above and a tire manufactured using the rubber including the rubber composition described above.

Briefly, the present invention may provide a tire rubber composition with improved physical properties, especially, wet traction properties and, in addition, a rubber including the aforementioned rubber composition and a tire manufactured using the rubber including the rubber composition described above.

### DETAILED DESCRIPTION OF THE INVENTION

The tire rubber composition according to the present invention comprises 1 to 50 parts by weight of oil obtained by combining natural fat with a modified rosin-based resin, relative to 100 parts by weight of rubber material, wherein the modified rosin-based resin is a resin obtained by adding at least one selected from a group consisting of clay and C₁ to C₁₀ fatty acid alkylesters to rosin-based resin, then, agitating the mixture.

The rubber material used herein may comprise at least one selected from natural rubber and synthetic rubber.

An example of the rubber material may be a rubber mixture including one natural rubber and one synthetic rubber in a mixing ratio by weight of 1 : 9 to 9 : 1.

The rubber material may comprise a rubber mixture including at least two kinds of synthetic rubbers.

An example of the rubber mixture including at least two kinds of synthetic rubbers may be a rubber mixture including one synthetic rubber and another synthetic rubber in a mixing ratio by weight of 1 : 9 to 9 : 1.

The natural rubber and the synthetic rubber used herein are not particularly limited so long as they are used for tire rubber compositions. Examples of the synthetic rubber may include at least one selected from a group consisting of styrene-butadiene rubber (SBR), modified styrene-butadiene rubber, butadiene rubber (BR), modified butadiene rubber, chlorosulfonated polyethylene rubber, epichlorohydrin rubber, fluorine rubber, silicone rubber, nitrile rubber, hydrogenated nitrile rubber, nitrile-butadiene rubber (NBR), modified nitrile-butadiene rubber, chlorinated polyethylene rubber, styrene-ethylenebutylenestyrene (SEBS) rubber, ethylenepropylene rubber, ethylenepropylenediene (EPDM) rubber, hypalon rubber, chloroprene rubber, ethylene vinyl acetate rubber, acryl rubber, hydrin rubber, vinylbenzyl chloride styrene-butadiene rubber, bromomethyl styrene butyl rubber, maleic acid styrene-butadiene rubber, carboxylic acid styrene-butadiene rubber, epoxy isoprene rubber, maleic acid ethylenepropylene rubber, carboxylic acid nitrile-butadiene rubber, brominated polyisobutyl isoprene-co-paramethyl styrene (BIMS), and the like.

The modified rosin-based resin is prepared by adding at least one selected from a group consisting of clay and C₁ to C₁₀ fatty acid alkylesters to rosin-based resin then agitating the mixture.

The fatty acid alkylesters may include, for example, fatty acid methylester, fatty acid ethylester, fatty acid isopropylester, fatty acid octylester and/or mixture thereof, however, the present invention is not particularly limited thereto.

As an example of the modified rosin-based resin used herein, the clay-modified rosin-based resin may be prepared by mixing clay having a particle size of 0.1 to 100 µm with rosin-based resin, then, agitating the mixture at 100 to 1,000 rpm for 1 to 10 hours.

The modified rosin-based resin is prepared by mixing 5 to 20 wt.% of clay or fatty acid alkylester with 80 to 95 wt.% of rosin-based resin, then, agitating the mixture at 100 to 1,000 rpm for 1 to 10 hours.

The oil comprising a combination of natural fat and the modified rosin-based resin may be prepared by reacting natural fat with modified rosin-based resin.

The oil comprising a combination of natural fat and the modified rosin-based resin may be prepared by reacting 50 to 99 wt.% of natural fat with 1 to 50 wt.% of modified rosin-based resin.

The oil comprising a combination of natural fat and the modified rosin-based resin may be prepared by reacting 50 to 99 wt.% of natural fat with 1 to 50 wt.% of modified rosin-based resin at 300 to 400°C for 3 to 6 hours.

As for the modified rosin-based resin, the clay or the C₁ to C₁₀ fatty acid alkylesters is used to improve bonding of the natural fat and the rosin-based resin during combination thereof. That is, the clay or the C₁ to C₁₀ fatty acid alkylesters improves dispersible properties of the rosin-based resin during combination of the natural fat and the rosin-based resin, thereby increasing bonding of the natural fat and the rosin-based resin.

If an amount of the modified rosin-based resin in the oil comprising a combination of the natural fat and the modified rosin-based resin is less than 1 wt.%, physical properties of the rubber composition may be decreased.

Conversely, using more than 50 wt.% of modified rosin-based resin may encounter problems such as reduction in combination processing properties and/or deteriorated wet traction properties. Therefore, it is preferable that the oil comprising a combination of the natural fat and the modified rosin-based resin contains 50 to 99 wt.% of natural fat and 1 to 50 wt.% of modified rosin-based resin.

The natural fat may include, for example, at least one or two selected from a group consisting of palm oil, olive oil, soybean oil, rapeseed oil, sunflower oil, grape seed oil, cotton seed oil, canola oil and cashew nut shell liquid (CNSL).

The oil comprising a combination of the natural fat and the modified rosin-based resin may be added in an amount of 1 to 50 parts by weight relative to 100 parts by weight of rubber material. If the amount of the oil is less than 1 part by weight relative to 100 parts by weight of rubber material, the oil may slightly function as a process softener. On the other hand, if the amount of the oil exceeds 50 parts by weight relative to 100 parts by weight of rubber material, energy loss due to slipping of rubber on the oil during mixing may be increased.

The rosin-based resin used herein may comprise gum rosin, wood rosin, tool oil rosin and/or mixtures thereof.

The tire rubber composition of the present invention may further comprise a filler to improve reinforcing properties of the rubber composition.

An amount of the filler used herein may range from 30 to 80 parts by weight relative to 100 parts by weight of rubber material.

If the amount of the filler is less than 30 parts by weight relative to 100 parts by weight of rubber material, the rubber composition has slight reinforcing properties. When the amount of the filler exceeds 80 parts by weight relative to 100 parts by weight of rubber material, processing properties of the rubber composition may be reduced. Therefore, it is preferable that the filler is added in an amount of 30 to 80 parts by weight relative to 100 parts by weight of rubber material.

The filler may include, for example, at least one selected from a group consisting of carbon black, silica, titanium dioxide, layered silicate, tungsten, talc and syndiotactic-1,2-polybutadiene (SPB).

Among the fillers, carbon black may have a particle size of 10 to 100nm.

Among the fillers, carbon black may have an iodine adsorption value of 70 to 120mg/g.

Among the fillers, carbon black may have a DBP adsorption value of 80 to 150mg/100g.

Preferably, carbon black may have an iodine adsorption value of 70 to 120mg/g and a DBP adsorption value of 80 to 150mg/100g.

More preferably, carbon black may have a particle size of 10 to 100nm, an iodine adsorption value of 70 to 120mg/g and a DBP adsorption value of 80 to 150mg/100g.

Among the fillers, silica may have a BET adsorption value of 140 to 200 (m²/g).

Among the fillers, silica may have a DBP adsorption value of 170 to 230 (ml/100g).

Among the fillers, silica may have a fine pore volume of 0.005 to 0.020 (cc/g).

Preferably, silica may have a BET adsorption value of 140 to 200 (m²/g), and a DBP adsorption value of 170 to 230 (ml/100g).

More preferably, silica may have a BET adsorption value of 140 to 200 (m²/g), a DBP adsorption value of 170 to 230 (ml/100g) and a fine pore volume of 0.005 to 0.020 (cc/g).

Among the fillers, layered silicate may have an interlayer spacing of 0.1 to 10nm.

Among the fillers, the layered silicate may have an aspect ratio (1/d) of more than 5, which means a ratio of planar width (1) to thickness (d).

Among the fillers, the layered silicate preferably has an aspect ratio of 5 to 100.

Among the fillers, the layered silicate may comprise natural layered silicate for cationic exchange reaction and/or anionic exchange reaction.

Among the fillers, the layered silicate may comprise synthetic layered silicate for cationic exchange reaction and/or anionic exchange reaction.

The layered silicate may comprise organic layered silicate organically treated by materials having cation groups and/or anion groups.

The layered silicate may include, for example, at least one selected from a group consisting of montmorillonite, saponite, hectorite, rectorite, vermiculite, mica, illite, kaolinite, sodium montmorillonite (Na-MMT) and Cloisite 15A.

Among the fillers, syndiotactic-1,2-polybutadiene (SPB) may have a diameter of 0.01 to 0.1 µm and a specific surface area of 80 to 90m²/g.

Alternatively, SPB may have a diameter of 1 to 10 µm and a specific surface area of 100 to 120m²/g.

The tire rubber composition of the present invention may include the rubber material described above, an oil comprising a combination of natural fat and modified rosin-based resin, a reinforcing filler and, optionally, other additives generally used in conventional tire rubber compositions such as a filler, an active agent, an anti-ageing agent, an adhesive, a vulcanizing agent, a vulcanization accelerator, a vulcanization retardant, and so forth, in desired amounts. However, such additives are not considered as significant ingredients of the inventive rubber composition but comprise known components commonly contained in the tire rubber compositions. Therefore, a detailed description thereof will be omitted hereinafter where it may cause the subject matter of the invention to be rather unclear.

As a result of applying tire rubber compositions under various conditions such as kinds of components, contents, etc., it may be believed that the inventive tire rubber composition under the foregoing conditions are preferably employed to accomplish the purposes of the present invention.

The present invention may include a rubber comprising the tire rubber composition described above.

The present invention may include a tire containing the rubber comprising the tire rubber composition described above.

The present invention may include a tire having a tread made of the rubber comprising the tire rubber composition described above.

The tire containing the rubber comprising the tire rubber composition described above may include at least one selected from a group consisting of an automobile tire, a truck tire, a bus tire, a motorbike tire and an aircraft tire, however, the present invention is not particularly limited thereto.

Hereinafter, preferred embodiments of the present invention will be described in detail in the following examples which are given for illustrative purposes only and should not be construed as limiting the spirit and scope of the invention.

### EXAMPLE 1

As a rubber material, styrene butadiene rubber (SBR) was used. 70 parts by weight of silica and 10 parts by weight of oil comprising a combination of natural fat and clay-modified rosin-based resin as a process oil were mixed with 100 parts by weight of the SBR so as to prepare a rubber mixture.

2.0 parts by weight of sulfur as a vulcanizing agent and 1.0 part by weight of N,N-dicyclohexyl-2-benzothiazole (DCBS) as a vulcanizing accelerator were added to the rubber mixture, followed by vulcanizing the resultant mixture at 160°C for 25 minutes so as to obtain a rubber specimen.

The used silica has a BET adsorption value of 150±10m²/g and a DBP adsorption value of 190±10ml/100g.

The oil comprising a combination of natural fat and clay-modified rosin-based resin used in this example was prepared by heating 30 wt.% of clay-modified rosin-based resin and 70 wt.% of palm oil as the natural fat at 300 °C for 3 hours, wherein the modified rosin-based resin is obtained by mixing 20 wt.% of clay with a particle size of 50±5 µm and 80 wt.% of gum rosin-based resin as a rosin-based resin, then, agitating the mixture at 500 rpm for 3 hours.

Constituents of the rubber specimen are listed in Table 1 below.

### EXAMPLES 2

The same procedure described in Example 1 was repeated to prepare a rubber specimen, except that fatty acid methylester is used instead of clay. Constituents of the prepared rubber specimens are listed in Table 1.

### EXAMPLES 3

The same procedure described in Example 1 was repeated to prepare a rubber specimen, except that fatty acid ethylester is used instead of clay. Constituents of the prepared rubber specimens are listed in Table 1.

### EXAMPLES 4

The same procedure described in Example 1 was repeated to prepare a rubber specimen, except that fatty acid isopropylester is used instead of clay. Constituents of the prepared rubber specimens are listed in Table 1.

### EXAMPLES 5

The same procedure described in Example 1 was repeated to prepare a rubber specimen, except that fatty acid octylester is used instead of clay. Constituents of the prepared rubber specimens are listed in Table 1.

### COMPARATIVE EXAMPLE

The same procedure described in Example 1 was repeated to prepare a rubber specimen, except that 10 parts by weight of a conventional aromatic oil (A#2 oil) is used as a process oil, in place of the oil comprising a combination of natural fat and clay-modified rosin-based resin.

**TABLE 1**

| Rubber compositions according to Examples and Comparative Example (unit: parts by weight) | | |
|---|---|---|
| Compositions | Examples 1 to 5 | Comparative Example |
| Rubber material (SBR) | 100 | 100 |
| Silica | 70 | 70 |
| Natural modified oil* | 10 | - |
| Aromatic oil | - | 10 |
| Vulcanizing agent (sulfur) | 2.0 | 2.0 |
| Vulcanizing accelerator (DCBS) | 1.0 | 1.0 |

| | | |
|---|---|---|
| * Oil comprising a combination of natural fat and modified rosin-based resin | | |

### EXPERIMENTAL EXAMPLE

For each of the rubber specimens produced by Examples 1 to 5 and Comparative Example, physical properties of the specimen were measured according to ASTM regulations and the results are shown in Table 2 below.

**TABLE 2**

| Physical properties of rubber according to Examples 1 to 5 and Comparative Example. | | | | | | | |
|---|---|---|---|---|---|---|---|
| Test items | Test results | Com. Ex | Ex. 1 | Ex. 2 | Ex. 3 | Ex. 4 | Ex. 5 |
| Rheometer (180°C) | Toq (max) | 39.7 | 36.3 | 37.5 | 36.2 | 38.3 | 37.5 |
| | Toq (min) | 17.6 | 15.7 | 17.3 | 16.7 | 16.5 | 15.7 |
| | T 40 | 6.7 | 6.5 | 6.0 | 5.9 | 6.2 | 6.7 |
| | T 50 | 9.7 | 9.1 | 8.7 | 8.6 | 9.5 | 9.3 |
| | T 90 | 10.7 | 10.0 | 9.3 | 9.8 | 9.4 | 10.0 |
| Pattern viscosity (125°C) (100°C) | Viscosity | 40 | 36 | 37 | 36 | 37 | 35 |
| | T 05 | 29.0 | 25.7 | 27.4 | 26.3 | 28.5 | 26.6 |
| | T 35 | 32.4 | 29.9 | 32.2 | 29.5 | 28.3 | 29.2 |
| | Viscosity | 59 | 57 | 53 | 55 | 53 | 56 |
| Tensile strength (initial) Ageing 24 hr | Hard's | 68 | 68 | 67 | 69 | 69 | 68 |
| | M-100% | 28 | 26 | 29 | 27 | 27 | 28 |
| | M-300% | 121 | 120 | 125 | 130 | 127 | 126 |
| | T.S. | 163 | 165 | 162 | 165 | 161 | 165 |
| | E.B. | 401 | 411 | 407 | 411 | 423 | 436 |
| Heating | Temp. Rise | 38.1 | 35.3 | 29.5 | 30.3 | 30.2 | 29.5 |
| Elasticity (rebounding) | Index | 23.8 | 30.0 | 30.9 | 31.6 | 33.3 | 33.1 |
| Abrasion | Pico | 0.062 | 0.055 | 0.055 | 0.056 | 0.040 | 0.049 |
| | Din abrasion | 0.105 | 0.093 | 0.095 | 0.099 | 0.087 | 0.078 |
| Fatigue properties (DIMATIA) 10,000cyl. | Raw | 22.5 | 21.7 | 21.3 | 20.7 | 22.5 | 22.5 |
| | Column | 7.5 | 7.3 | 7.6 | 7.2 | 7.5 | 7.3 |
| DMTA | Tg | -30.8 | -31.3 | -32.6 | -33.5 | -36.3 | -31.7 |
| | Tanδ@0°C | 0.237 | 0.272 | 0.267 | 0.260 | 0.273 | 0.277 |
| | Tanδ@70°C | 0.215 | 0.200 | 0.215 | 0.212 | 0.205 | 0.207 |

With respect to tensile properties listed in Table 2,
* Ageing: Aged conditions of each of rubber specimens determined after thermally ageing the rubber specimen at 105°C for 24 hours and leaving the aged specimen at room temperature;
* " - " : Meaning that measurement is not possible;
* Tanδ@0°C: A value used for estimation of wet traction properties among performances of tire, wherein the wet traction properties are more excellent when the value is larger;
* Tanδ@70°C: A value used for estimation of rolling resistance among performances of tire, wherein the rolling resistance is more excellent when the value is smaller; and
* Abrasion: Indicating an amount of the worn rubber specimen, wherein abrasion properties of the specimen are more excellent when the measured value is smaller.

From the results shown in Table 2, it can be seen that each of the rubber specimens fabricated using the oil comprising a combination of natural fat and modified rosin-based resin in Examples of the present invention exhibits superior characteristics such as mixing properties, dispersible properties, vulcanization rate, wet traction properties, hardness, reinforcing properties, etc., as compared to the rubber specimen fabricated using the conventional aromatic oil in Comparative Example.

Consequently, compared to the conventional tire rubber composition with a process oil containing aromatic ingredients, the present invention may provide an eco-friendly tire rubber composition with improved physical properties, especially, enhanced wet traction properties.

While the present invention has been described with reference to exemplary embodiments, it will be understood by those skilled in the art that various modifications and variations may be made therein without departing from the scope of the present invention as defined by the appended claims.

## Claims

1. A tire rubber composition comprising: 1 to 50 parts by weight of oil formed by combining natural fat with modified rosin-based resin, relative to 100 parts by weight of rubber material,
wherein the modified rosin-based resin is obtained by adding at least one selected from a group consisting of clay and C₁ to C₁₀ fatty acid alkylesters to rosin-based resin, then, agitating the mixture.

2. The tire rubber composition according to claim 1, wherein the fatty acid alkylesters are at least one selected from a group consisting of fatty acid methylester, fatty acid ethylester, fatty acid isopropylester and fatty acid octylester.

3. The tire rubber composition according to claim 1, wherein the clay has a particle size ranging from 0.1 to 100 *µ*m.

4. The tire rubber composition according to claim 1, wherein the oil comprising a combination of the natural fat and the modified rosin-based resin is obtained by reacting 50 to 99 wt.% of natural fat with 1 to 50 wt.% of modified rosin-based resin at 300 to 400°C for 3 to 6 hours.

5. The tire rubber composition according to claim 1, wherein the natural fat is at least one selected from a group consisting of palm oil, olive oil, soybean oil, rapeseed oil, sunflower oil, grape seed oil, cotton seed oil, canola oil and cashew nut shell liquid (CNSL).

6. The tire rubber composition according to claim 1, wherein the rosin-based resin is at least one selected from a group consisting of gum rosin, wood rosin and toll oil rosin.

7. A rubber comprising the rubber composition as set forth in claim 1.

8. A tire including a rubber comprising the rubber composition as set forth in claim 1.

9. The tire according to claim 8, wherein the rubber is a tread part of the tire.

## Patentansprüche

1. Reifengummizusammensetzung, die Folgendes umfasst: 1 bis 50 Gewichtsteile Öl, die durch die Kombination von natürlichem Fett mit verändertem kolophoniumbasierten Harz bezogen auf 100 Gewichtsteile Gummistoff gebildet werden,
wobei das veränderte kolophoniumbasierte Harz durch Hinzufügen von mindestens einem aus einer Gruppe, die aus Ton und C1- bis C10-Fettsäurealkylestern besteht, Ausgewähltem zum kolophoniumbasierten Harz und anschließendes Schütteln der Mischung gewonnen wird.

2. Reifengummizusammensetzung gemäß Anspruch 1, wobei die Fettsäurealkylester mindestens ein aus einer Gruppe, die aus Fettsäuremethylester, Fettsäureethylester, Fettsäureisopropylester und Fettsäureoctylester besteht, Ausgewähltes sind.

3. Reifengummizusammensetzung gemäß Anspruch 1, wobei der Ton eine Partikelgröße von 0,1 bis 100 µm aufweist.

4. Reifengummizusammensetzung gemäß Anspruch 1, wobei das Öl eine Kombination des natürlichen Fetts umfasst und das veränderte kolophoniumbasierte Harz durch Reaktion von 50 bis 99 Gew.-% des natürlichen Fetts mit 1 bis 50 Gew.-% des veränderten kolophoniumbasierten Harzes bei 300 bis 400 °C für 3 bis 6 Stunden gewonnen wird.

5. Reifengummizusammensetzung gemäß Anspruch 1, wobei das natürliche Fett mindestens ein aus einer Gruppe, die aus Palmöl, Olivenöl, Sojabohnenöl, Rapsöl, Sonnenblumenöl, Traubenkernöl, Baumwollsamenöl, Canolaöl und Cashew-Nut-Shell-Liquid (CNSL) besteht, Ausgewähltes ist.

6. Reifengummizusammensetzung gemäß Anspruch 1, wobei das kolophoniumbasierte Harz mindestens ein aus einer Gruppe, die aus Balsamharz, Wurzelharz und Tallharz besteht, Ausgewähltes ist.

7. Gummi, das eine Gummizusammensetzung wie in Anspruch 1 dargelegt umfasst.

8. Reifen einschließlich eines Gummis, das eine Gummizusammensetzung wie in Anspruch 1 dargelegt umfasst.

9. Reifen gemäß Anspruch 8, wobei das Gummi ein Laufflächenteil des Reifens ist.

## Revendications

1. Composition de caoutchouc pour pneu comprenant : 1 à 50 parties en poids d'une huile formée par combinaison d'une matière grasse naturelle avec une résine à base de colophane modifiée, pour 100 parties en poids du matériau en caoutchouc,
dans laquelle la résine à base de colophane modifiée est obtenue par addition d'au moins un composé choisi dans le groupe constitué de l'argile et des alkylesters d'acides gras en C₁-C₁₀ à une résine à base de colophane, ensuite par agitation du mélange.

2. Composition de caoutchouc pour pneu selon la revendication 1, dans laquelle les alkylesters d'acides gras sont au moins un composé choisi dans le groupe constitué du méthylester d'acide gras, de l'éthylester d'acide gras, de l'isopropylester d'acide gras et de l'octylester d'acide gras.

3. Composition de caoutchouc pour pneu selon la revendication 1, dans laquelle l'argile a une taille de particules s'échelonnant de 0,1 à 100 µm.

4. Composition de caoutchouc pour pneu selon la revendication 1, dans laquelle l'huile comprenant une combinaison de la matière grasse naturelle et de la résine à base de colophane modifiée est obtenue par réaction de 50 à 99 % en poids d'une huile naturelle avec 1 à 50 % en poids d'une résine à base de colophane modifiée, à une température de 300 à 400 °C pendant 3 à 6 heures.

5. Composition de caoutchouc pour pneu selon la revendication 1, dans laquelle la matière grasse est au moins une huile choisie dans le groupe constitué de l'huile de palme, de l'huile d'olive, de l'huile de soja, de l'huile de colza, de l'huile de tournesol, de l'huile de pépin de raisin, de l'huile de graines de coton, de l'huile de canola et de l'huile de noix d'acajou (HNA).

6. Composition de caoutchouc pour pneu selon la revendication 1, dans laquelle la résine à base de colophane est au moins un composé choisi dans le groupe constitué de la gomme de colophane, de la colophane de bois et de la colophane de tallol.

7. Caoutchouc comprenant la composition de caoutchouc tel que présentée dans la revendication 1.

8. Pneu comprenant un caoutchouc comprenant la composition de caoutchouc tel que présentée dans la revendication 1.

9. Pneu selon la revendication 8, dans lequel le caoutchouc est une partie de roulement du pneu.
